Europäisches Patentamt

European Patent Office

Office européen des brevets

(19)

(11) Veröffentlichungsnummer : **0 205 896**
**B1**

(12)                    EUROPÄISCHE PATENTSCHRIFT

(45) Veröffentlichungstag der Patentschrift :
27.07.88

(21) Anmeldenummer : 86106604.1

(22) Anmeldetag : 15.05.86

(51) Int. Cl.⁴ : **F 16 L 21/00**

(54) **Rohrkupplung.**

(30) Priorität : 17.06.85 CH 2556/85

(43) Veröffentlichungstag der Anmeldung :
30.12.86 Patentblatt 86/52

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
DE-A- 2 731 465
GB-A-    443 375
US-A- 2 449 795
US-A- 2 451 354

(73) Patentinhaber : **Straub, Immanuel**

**CH-7323 Wangs (CH)**

(72) Erfinder : **Straub, Immanuel**

**CH-7323 Wangs (CH)**

(74) Vertreter : **Patentanwälte Schaad, Balass & Partner**
**Dufourstrasse 101 Postfach**
**CH-8034 Zürich (CH)**

## Beschreibung

Die Erfindung betrifft eine Rohrkupplung der im Oberbegriff des Patentanspruches 1 genannten Art.

Eine solche Rohrkupplung ist beispielsweise aus der CH-A-620 509, die weitgehend inhaltgleich mit der DE-A-2 731 465 und der US-A-4 119 333 ist, bekannt.

Bei der bekannten Kupplung hat der Haltering die Form eines hohlen Kegelstumpfes, der mit seinem äusseren Durchmesser in der Kehle zwischen Endflansch und Innenwand des Gehäuses in axialer Richtung abgestützt ist. An seinem inneren Umfang ist der Haltering der bekannten Kupplung durch radiale Einschnitte lamelliert, wobei die Lamellen sich jalousieartig überlappen. Dadurch bilden die freien Enden der Lamellen am Innendurchmesser des Halteringes Krallenelemente, die beim Spannen des Gehäuses in die Aussenfläche der zu verbindenden Rohrenden eindringen bzw. sich dort verkrallen.

Die Eindringtiefe dieser freien Enden der Lamellen der bekannten Kupplung ist einerseits vom Ausmass abhängig, um welches das Gehäuse gespannt wird, andererseits und vor allem aber vom Werkstoff der Rohre.

Es hat sich gezeigt, dass bei Rohren aus weicheren, vergleichsweise leicht plastisch deformierbaren Werkstoffen die Spannringe der bekannten Kupplung zu tiefe und darüber hinaus mit der Zeit noch tiefer werdende Spuren an der Aussenfläche der Rohre hinterlassen. Diese Spuren schwächen in ganz erheblichem Masse die Zugfestigkeit des Rohres. Dies trifft namentlich für reine und für armierte Kunststoffrohre zu, aber auch für Rohre aus gewissen Leichtmetallegierungen.

Es hat sich ferner gezeigt, dass gerade bei Rohren aus solchen Werkstoffen die Belastbarkeit auf Zug einer mit der bekannten Rohrkupplung hergestellten Rohrverbindung sehr beschränkt ist. Wird eine solche Verbindung zwischen Rohren aus vergleichsweise weichem Material einer grösseren Zugspannung ausgesetzt, z. B. weil die Rohre sich infolge Abkühlung in ihrer Länge verkürzen oder infolge innerer Druckbeaufschlagung, dann vermag das weiche Rohrmaterial den eingedrungenen, freien Enden der Halteringe-Lamellen nicht zu widerstehen. Diese Haltering-Lamellen wirken dann nicht mehr als Verankerungselemente, sondern eher als Hobelmeissel, die die Aussenfläche der sich infolge der Zugbeanspruchung der Rohrverbindung aus der Kupplung zurückziehenden Rohrenden zerspanen, wodurch die Verankerungswirkung auch dann verlorengeht, wenn sich die Länge der Rohre auf das ursprüngliche Mass zurückbildet.

Im übrigen gilt für Kunststoffrohre die Regel, dass Verankerungselemente höchstens etwa um 10 % der Rohrwandstärke in die Aussenfläche eindringen sollen, um die Zugfestigkeit der Rohre nicht entscheidend zu schwächen. Bei der bekannten Rohrkupplung ist aber — wie bereits angedeutet — die Eindringtiefe der freien Enden der Lamellen nicht begrenzt und somit unbestimmt.

Es ist daher ein Zweck der Erfindung, eine Rohrkupplung der eingangs genannten Art zu schaffen, bei der die vorstehend genannten Nachteile weitgehend behoben sind, die also nicht nur zur einwandfrei dichtenden, sondern auch zur axial belastbaren Verbindung auch von Rohren aus weichem Material geeignet ist.

Zu diesem Zweck weist die vorgeschlagene Rohrkupplung, die im Kennzeichen des Patentanspruches 1 definierten Merkmale auf.

Da der Haltering zylindrisch ist, können die von seiner inneren Mantelfläche nach innen abstehenden Zähne nur so weit in die Aussenfläche der Rohre eindringen, bis die innere Mantelfläche der Halteringe zur satten Auflage an die Aussenfläche der Rohre gelangt. Das durch die Zähne des Halteringes verdrängte Rohrmaterial wird in die der Frontfläche des jeweiligen Zahnes vorgelagerte Vertiefung aufgeworfen, so dass sich an der Aussenfläche der Rohre eine Profilierung ausbildet, die im wesentlichen gegengleich zur Profilierung der Zähnung an der inneren Mantelfläche des Halteringes ist. Selbst wenn eine mit der vorgeschlagenen Kupplung hergestellte Rohrverbindung einer erheblichen Zugbeanspruchung ausgesetzt wird, können die Zähne die Rohre oberflächlich nicht zerspanen, denn allenfalls zerspantes Rohrmaterial könnte wegen der satt anliegenden inneren Mantelfläche des Spannringes gar nicht abfliessen.

Zum leichteren Verständnis der Erfindung ist nachstehend an Hand der Zeichnung ein Ausführungsbeispiel beschrieben.

Es zeigt :

Fig. 1 oben einen Axialschnitt, unten eine Seitenansicht einer Kupplung in ungespanntem Zustand,

Fig. 2 eine Stirnansicht der Kupplung gemäss Fig. 1,

Fig. 3 in vergrösserter Darstellung das in Fig. 1 mit der Linie D eingekreiste Detail, aus dem das Axialprofil der Zähne an der inneren Mantelfläche der Halteringe ersichtlich ist, d. h. ein Schnitt längs den Linien III-III der Fig. 4 und 5,

Fig. 4 und 5 einen Schnitt längs der Linie B-B der Fig. 3 von zwei unterschiedlichen Ausführungsformen,

Fig. 6 und 7 Ansichten in Richtung des Pfeiles A der Fig. 3 auf die Ausführungsformen der Fig. 4 bzw. 5, und

Fig. 8 einen Detailschnitt in vergrössertem Massstab der Kupplung im Bereich des Details D der Fig. 1, bei um ein Kunststoffrohr festgespannter Kupplung.

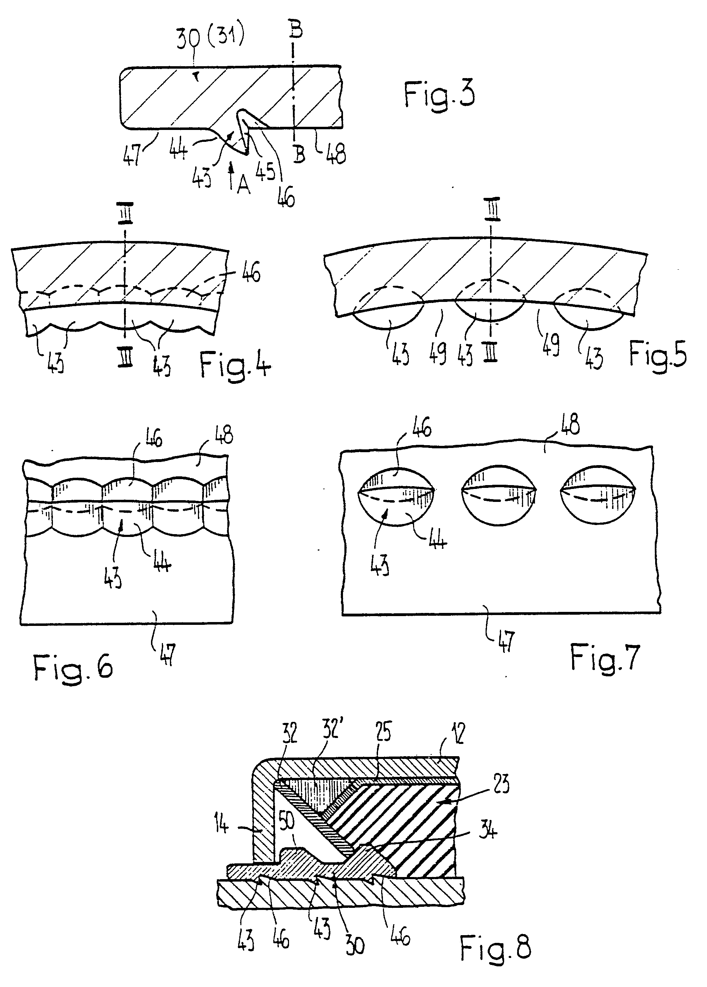

Die in Fig. 1 und 2 dargestellte Rohrkupplung 10 besitzt ein Gehäuse 11 etwa in der Form eines längsgeschlitzten Rohres. Das Gehäuse 11 weist einen Gehäusekörper 12 auf, der an seinen beiden Stirnseiten mit radial nach innen weisenden Endflanschen 13, 14 versehen ist. Die an den Längsschlitz des Gehäuses 11 angrenzenden Endbereiche des Gehäusekörpers 12 sind nach aussen zu Laschen 15, 16 umgebogen, und die Enden dieser Endbereiche sind bei 17 bzw. 18 an der Aussenseite des zylindrischen Bereiches des Gehäusekörpers 12 angeschweisst. In jeder Lasche ist ein mit Querbohrungen versehener Bolzen 19, 20 eingesteckt, wobei die Querbohrungen des Bolzens 19 mit einem Muttergewinde versehen sind. In dieses Muttergewinde ist je ein Gewindebolzen 21 bzw. 22 geschraubt, der mit Spiel durch die Querbohrungen im Bolzen 20 greift. Zieht man die Gewindebolzen 21, 22 an, so zieht sich das Gehäuse 11 wie eine einteilige Rohrschelle unter Verringerung seines Durchmessers zusammen.

Das Gehäuse 11 umschliesst eine Elastomer-Dichtmanschette 23, die einen im wesentlichen C-förmigen, nach innen offenen Axialquerschnitt aufweist. Die Dichtmanschette 23 weist dementsprechend einen Steg 24 auf, dessen nach innen gekehrte Oberfläche im Axialschnitt ein gewelltes Profil aufweist und dessen nach aussen gekehrte Oberfläche unter Zwischenlage einer auch den Spannspalt des Gehäuses 11 überbrückenden Stahlbandeinlage 25 satt an der Innenwand des Gehäusekörpers 12 anliegt. Der Steg hat deshalb ein gewelltes Profil, um zu verhindern, dass der Steg bei thermischer Wechselbeanspruchung der Dichtmanschette sich nach innen abhebt. An beiden Enden des Steges 24 ist je eine nach innen weisende Dichtlippe 26, 27 angeformt, die ihrerseits zwischen ihrer Wurzel und ihrer eigentlichen Dichtkante über einen leicht gedehnten Schraubfederring 28, 29 am Steg 24 abgestützt ist.

Im Anschluss an die stirnseitigen Enden der Manschetten 23 ist je ein bezüglich seines Durchmessers verengungsfähiger, d. h. offener Haltering 30, 31 vorgesehen, der sich mit seiner äusseren Mantelfläche an der Innenkante der Flansche 14 bzw. 13 abstützt. Des weiteren ist jeder Haltering 30, 31 über einen kegelstumpfförmigen Federring 32, 33 abgestützt. Dieser liegt mit seinem Innenumfang an einer an der äusseren Mantelfläche des Halteringes 30 bzw. 31 ausgebildeten Schulter 34, 35 an, während sein Aussenumfang in die Kehle zwischen dem Gehäusekörper 12 einerseits und dem betreffenden Endflansch 14 bzw. 13 andererseits eingreift. Zwischen den Federringen 32, 33 und den konisch nach innen gebogenen, axialen Enden der Stahlbandeinlage 25 ist je ein Sprengring 32', 33' mit einem dreieckigen Querschnitt eingelegt.

An der inneren Mantelfläche der Halteringe 30, 31 sind je drei in axialem Abstand voneinander angeordnete Kränze 36, 37, 38 von nach innen abstehenden Zähnen ausgebildet. Diese Kränze 36, 37 und 38 sind in Fig. 1 der Einfachheit halber nur mit ausgezogenen Linien angedeutet. Die Form bzw. das Profil dieser Zähne ist nachstehend an Hand der Fig. 3-7 beschrieben. Zu beiden Seiten jedes Kranzes 36-38 ist die innere Mantelfläche der Halteringe 30, 31 glatt und zylindrisch. Wie der Fig. 2 zu entnehmen ist, sind die Endabschnitte jedes der Halteringe 30, 31 bei 39 und 40 nach aussen aufgebogen, um die Verdrehungslage der Halteringe inbezug auf das Gehäuse 11 zu sichern.

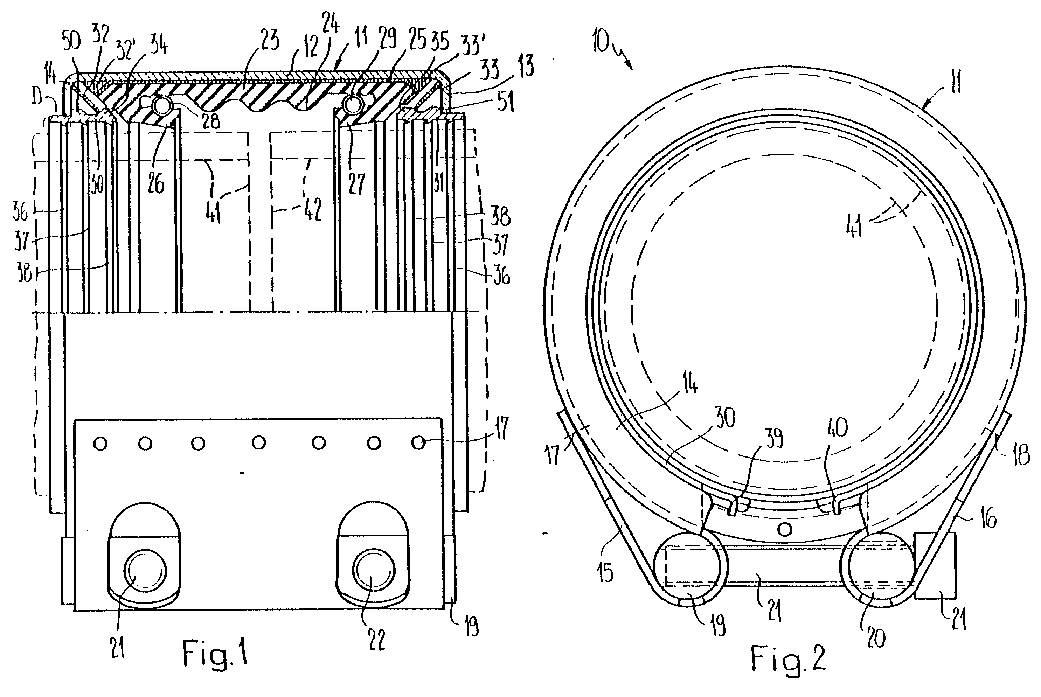

Wie bereits dargelegt, ist in Fig. 1 und 2 die Kupplung dargestellt, bevor die Gewindebolzen 21, 22 angezogen wurden, d. h. in montagebereitem Zustand. In diesem Zustand besitzen die Dichtkanten der Dichtlippen 26, 27 sowie die Halteringe 30, 31 einschliesslich der nach innen abstehenden Zähne einen Innendurchmesser, der grösser ist als der Aussendurchmesser der zu verbindenden Rohre. In Fig. 1 und 2 sind die Umrisse der zu verbindenden Rohre mit den gestrichelten Linien 41, 42 angedeutet. Die beim Spannen der Gewindebolzen 21, 22 sich abspielenden Vorgänge sind nachstehend an Hand der Fig. 1 und der Fig. 8 andererseits noch beschrieben.

In Fig. 3 ist — stark vergrössert und überhöht — ein Schnitt durch einen Teil des Halteringes 30 (Detail D der Fig. 1) gezeigt, um das Axialprofil der an der Innenseite der Halteringe 30, 31 ausgebildeten Zähne zu beschreiben. Der in der Art eines Raspelzahnes aus der inneren Mantelfläche des Halteringes 30 (beim Haltering 31 sind die Zähne spiegelsymmetrisch ausgebildet) herausgehauene Zahn 43 besitzt einen der Kupplungsmitte abgekehrten, konvex gewölbten Rükken 44 sowie eine der Kupplungsmitte zugekehrte, im wesentlichen ebene Frontfläche 45. Diese Frontfläche 45 erstreckt sich in eine bzw. bildet zugleich die eine Wand einer unmittelbar der Frontfläche 45 vorgelagerten Vertiefung 46. An den Rücken 44 und an die Vertiefung 46 schliessen sich je ein glatter, zylindrischer Abschnitt 47, 48 der inneren Mantelfläche des Halteringes an. Idealerweise entspricht der Rauminhalt der in die zylindrische, innere Mantelfläche eingehauenen Vertiefung 46 etwa dem Rauminhalt des über die zylindrischen Abschnitte 47, 48 vorstehenden Abschnittes des Zahnes 43.

Wie noch darzutun sein wird, dringen beim Spannen des Gehäuses 11 die Zähne 43 in die Aussenfläche der zu verbindenden Rohre ein. Das dabei durch das Eindringen der Zähne in die Aussenfläche der Rohre verdrängte Rohrmaterial weicht in die Vertiefung 46 aus, so dass in die Aussenseite der Rohre ein im wesentlichen zu dem in Fig. 3 gezeigten Profil gegengleiches Profil eingeprägt wird.

Wie in Fig. 4 und 5 dargestellt, kann nun die « Zahnteilung » der Kränze 36-38 kleiner (Fig. 4) oder grösser (Fig. 5) gewählt werden. Die Teilung kann so gewählt werden, dass die Reihe der Zähne praktisch ununterbrochen ist (Fig. 4). Wird die Teilung grösser gewählt, entsteht zwischen benachbarten Zähnen eine Lücke 49, die gewissermassen eine Verbindung zwischen den Abschnitten 47 und 48 bildet. Das Mass, um welches die Zähne 43 von der zylindrischen inneren Mantelfläche der Halteringe 30, 31 nach innen abstehen, beträgt einige Zehntel Millimeter. In Fig. 3-5 sind diese Zähne stark überhöht gezeichnet.

Ist die Kupplung auf einen Rohrstoss aufgeschoben worden, können die Gewindebolzen 21, 22 angezogen werden. Dadurch verringert sich der Durchmesser des Gehäuses 11, die Dichtmanschette wird nach innen gestaucht, bis die Dichtlippen 26, 27 zur satten Auflage auf die Aussenfläche der Rohre kommen. Da die Dichtlippen 26, 27 über die Federringe 28, 29 am Steg 24 der Manschette abgestützt sind, werden sie — ohne in Umfangsrichtung gedehnt zu werden und ohne dass es zu einer Faltenbildung käme — auf die Rohre gedrückt. Gleichzeitig werden aber auch die Halteringe 30, 31 und die Federringe 32, 33 verengt, wobei letztere ihren Oeffnungswinkel etwas verringern. Dadurch werden die Halteringe 30, 31 zusätzlich zur Verengung um ein geringes Mass in axialer Richtung in das Gehäuse 11 geschoben, was das Eindringen der Zähne 43 in das Rohrmaterial begünstigt. Sobald die zylindrischen Abschnitte der inneren Mantelfläche der Halteringe 30, 31 zur satten Auflage an der Aussenfläche der zu verbindenden Rohre kommen, ist die Rohrverbindung hergestellt. Die Stirnseiten der Dichtungsmanschette liegen satt an der Rückseite der Schulter 34 bzw. 35 und am inneren Bereich der Federringe 32, 33 an. Dieser Zustand ist in Fig. 8 dargestellt.

Wenn nun die so verbundenen Rohre beispielsweise mit Druck beaufschlagt werden, wird die Rohrverbindung auf Zug beansprucht. Da aber die Halteringe 30, 31 fest und unverschiebbar an der Aussenfläche der Rohre verankert sind und ausserdem an ihrer äusseren Mantelfläche einen weitern mit der Innenseite der Endflansche 14 bzw. 13 zusammenwirkenden Anschlagwulst 50 bzw. 51 (Fig. 1, 8) angeformt haben, wird die Zugbeanspruchung einwandfrei vom Gehäuse 11 aufgenommen. Eine sehr geringe axiale Verschiebung der Rohre und damit auch der Halteringe von der Kupplung weg ist möglich, falls die Vertiefungen 46 noch nicht vollständig mit Rohrmaterial ausgefüllt sind. Eine solche axiale Verschiebung hat zur Folge, dass auch die Federringe 32, 33 ihren Oeffnungswinkel wieder etwas vergrössern (sich aufstellen), wodurch die Halteringe 30, 31 insbesondere im Bereich des Kranzes 38 noch stärker an die Aussenseite der Rohre gedrückt werden.

**Patentansprüche**

1. Rohrkupplung mit einem mit Spannmitteln (19, 20, 21, 22) versehenen, die Form eines einteiligen, längsgeschlitzten Rohres aufweisenden Gehäuse (11), das durch Anziehen der Spannmittel (19, 20, 21, 22) in der Art einer Rohrschelle unter elastischer Verringerung seines Durchmessers um die zu verbindenden Rohrenden (41, 42) spannbar ist, und das an seinen Stirnseiten mit ringförmigen, nach innen weisenden Endflanschen (13, 14) versehen ist, sowie mit einer vom Gehäuse umschlossenen, im Axialquerschnitt C-förmigen, nach innen offenen Elastomer-Dichtungsmanschette (23), deren Innendurchmesser bei ungespanntem Gehäuse (11) ein Uebermass bezüglich der zu verbindenden Rohrenden aufweist und an deren beiden Stirnseiten anschliessend je ein offener, einteiliger bezüglich seines Durchmessers federnd verengungsfähiger und in axialer Richtung am Gehäuse (11) abgestützter Haltering (30, 31) angeordnet ist, dessen Innenumfang mit in Umfangsrichtung verteilt angeordneten Krallenelementen (43) versehen ist, die dazu bestimmt sind, beim Spannen des Gehäuses (11) in die Mantelfläche der zu verbindenden Rohrenden (41, 42) einzudringen, dadurch gekennzeichnet, dass jeder Haltering (30, 31) im wesentlichen zylindrisch ist, wobei dessen äussere Mantelfläche einerseits an der Innenkante des Endflansches (13, 14) und andererseits über einen an ihr ausgebildeten Anschlag (34, 35) und einen kegelstumpfförmigen Federring (32, 33) in der Kehle zwischen dem Endflansch (13, 14) und der Innenwand des Gehäuses (11) abgestützt ist, und wobei die Krallenelemente von der inneren Mantelfläche des Halteringes (30, 31) nach innen abstehende Zähne (43) sind, die einen der Kupplungsmitte abgekehrten, konvex gewölbten Rücken (44) sowie eine im wesentlichen ebene Frontfläche (45) aufweisen, die sich in eine der Frontfläche (45) unmittelbar vorgelagerte Vertiefung (46) hinein erstreckt.

2. Rohrkupplung nach Patentanspruch 1, dadurch gekennzeichnet, dass die Zähne (43) aus der inneren Mantelfläche des Halteringes (30, 31) aufgeworfen sind.

3. Rohrkupplung nach Patentanspruch 1, dadurch gekennzeichnet, dass die Zähne (43) und die zugeordneten Vertiefungen (46) in mehreren, eine axialen Abstand voneinander aufweisenden Kränzen (36, 37, 38) angeordnet sind, wobei zu beiden Seiten jedes Kranzes ein glatter Abschnitt der inneren Mantelfläche anschliesst.

4. Rohrkupplung nach Patentanspruch 1, dadurch gekennzeichnet, dass der Rauminhalt jeder Vertiefung (46) im wesentlichen dem Rauminhalt des von der inneren Mantelfläche des Halteringes (30, 31) nach innen vorstehenden Abschnittes des zugeordneten Zahnes (43) entspricht.

5. Rohrkupplung nach Patentanspruch 1 oder 3, dadurch gekennzeichnet, dass benachbarte Zähne (43) in Umfangsrichtung voneinander beabstandet sind (Fig. 5, 7).

6. Rohrkupplung nach Patentanspruch 1 oder 3, dadurch gekennzeichnet, dass benachbarte Zähne (43) in Umfangsrichtung unmittelbar nebeneinander angeordnet sind (Fig. 4, 6).

7. Rohrkupplung nach Patentanspruch 3, dadurch gekennzeichnet, dass die Zahnteilung in jedem Kranz (36, 37, 38) dieselbe ist.

8. Rohrkupplung nach Patentanspruch 7, dadurch gekennzeichnet, dass der eine Kranz (37) inbezug auf den benachbarten Kranz (36, 38) um eine halbe Zahnteilung in Umfangsrichtung verdreht ist.

**Claims**

1. Pipe coupling having a one-piece housing (11) in the shape of a longitudinally slotted tube and provided with tensioning means (19, 20, 21, 22), said housing (11), upon tightening of the tensioning means (19, 20, 21, 22) being capable of being tightened about the ends of the pipes to be connected by elastically reducing its diameter, said housing (11) being provided at its ends with inwardly extending end flanges (13, 14) and with an enclosed, inwardly open elastomer sealing gasket (23) having a C-shaped axial cross section, the inner diameter of said gasket being over-dimensioned with respect of the ends of the pipes to be connected when the housing is not tightened, at each of the ends of said gasket there being provided a one-piece and in respect of its diameter elastically reduceable, open retaining ring (30, 31) axially supported at the housing (11), the inner diameter of said ring (30, 31) being provided with circumferentially distributed spike elements (43) intended to engage the jacket surface of the pipes (41, 42) to be connected when the housing (11) is being tightened, characterized in that each retaining ring (30, 31) is substantially cylindrical, its outside jacket surface being supported on one hand at the inner edge of the end flange (13, 14) and on the other hand via a stop (34, 35) formed on it and via a frustro-conical spring ring (32, 33) in the groove between the end flange (13, 14) and the inside wall of the housing (11), the spike elements being teeth (43) protruding inwardly from the inside jacket surface, said teeth having a convex back (44) facing away from the center of the coupling and a substantially flat front surface (45) extending into a cavity (46) positioned immediately ahead of the front surface (45).

2. Pipe coupling according to patent claim 1, characterized in that the teeth (43) are file cut from the inner jacket surface of the retaining ring (30, 31).

3. Pipe coupling according to patent claim 1, characterized in that the teeth (43) and the associated cavities (46) are disposed in several, axially spaced rims (36, 37, 38), each side of each rim being followed by a smooth section of the inside jacket surface.

4. Pipe coupling according to patent claim 1, characterized in that the volume of each cavity (46) corresponds substantially to the volume of the portion of the associated tooth (43) extending inwardly from the inner jacket surface of the retaining ring (30, 31).

5. Pipe coupling according to patent claim 1 or 3, characterized in that adjacent teeth (43) are circumferentially spaced from each other (Fig. 5, 7).

6. Pipe coupling according to patent claim 1 or 3, characterized in that adjacent teeth (43) are circumferentially immediately adjacent to each other (Fig. 4, 6).

7. Pipe coupling according to patent claim 3, characterized in that the pitch of the teeth (43) in each rim (36, 37, 38) is equal.

8. Pipe coupling according to claim 7, characterized in that one of the rims (37) is circumferentially displaced by half a pitch of the teeth with respect to the adjacent rims (36, 38).

## Revendications

1. Raccord à tubes avec un boîtier (11) muni d'organes de serrage (19, 20, 21, 22) et présentant la forme d'un tube en une seule pièce, fondu dans le sens longitudinal, lequel boîtier peut être bloqué, par le serrage des organes de serrage (19, 20, 21, 22), à la manière d'un collier, avec réduction élastique de son diamètre, autour des extrémités de tubes (41, 42) à raccorder et qui porte sur ses faces frontales des brides d'extrémités annulaires (13, 14) dirigées vers l'intérieur, et avec un manchon d'étanchéité en élastomère (23) entouré par le boîtier, présentant une forme de C en coupe axiale et ouvert vers l'intérieur, dont le diamètre intérieur est surdimensionné par rapport aux tubes à raccorder lorsque le boîtier (11) n'est pas serré, et aux deux faces frontales duquel fait respectivement suite une bague de support ouverte (30, 31) d'une seule pièce pouvant être resserrée élastiquement et s'appuyant axialement sur le boîtier (11), laquelle bague de support est munie d'éléments de griffes (43) répartis dans le sens circonférentiel sur sa circonférence intérieure et destinés à pénétrer dans la surface latérale des extrémités de tubes (41, 42) lors du serrage du boîtier (11), caractérisé en ce que chaque bague de support (30, 31) est sensiblement cylindrique, sa surface latérale extérieure s'appuyant d'une part sur le bord intérieur de la bride d'extrémité (13, 14) et, d'autre part, par l'intermédiaire d'une butée (34, 35) conformée et d'une rondelle élastique tronconique (32, 33), dans la gorge entre la bride d'extrémité (13, 14) et la paroi intérieure du boîtier (11), et les éléments de griffes étant constitués par des dents (43) dépassant de la surface latérale intérieure de la bague de support (30, 31) lesquelles comportent un dos convexe (44) opposé au milieu du raccord ainsi qu'une face frontale sensiblement plane (45) laquelle s'étend dans un creux (46) situé immédiatement en avant de ladite face frontale (45).

2. Raccord à tubes selon la revendication 1, caractérisé en ce que les dents (43) sont repoussées de la surface latérale intérieure de la bague de support (30, 31).

3. Raccord à tubes selon la revendication 1, caractérisé en ce que les dents (43) et les creux (46) associés sont disposés en plusieurs couronnes (36, 37, 38) placées à distance axiale les unes des autres, une section lisse de la surface latérale intérieure étant prévue des deux côtés de chaque couronne.

4. Raccord à tubes selon la revendication 1, caractérisé en ce que le volume de chaque creux (46) correspond sensiblement au volume de la section de la dent (43) associée qui dépasse de la surface latérale intérieure de la bague de support (30, 31).

5. Raccord à tubes selon l'une des revendications 1 ou 3, caractérisé en ce que, dans le sens circonférentiel, des dents voisines (43) sont disposées à distance les unes des autres (fig. 5, 7).

6. Raccord à tubes selon l'une des revendications 1 ou 3, caractérisé en ce que, dans le sens circonférentiel, des dents voisines (43) sont disposées immédiatement les unes à côté des autres (fig. 4, 6).

7. Raccord à tubes selon la revendication 3, caractérisé en ce que le pas des dents est le même dans chaque couronne (36, 37, 38).

8. Raccord à tubes selon la revendication 7, caractérisé en ce que l'une des couronnes (37) est décalée par rapport à la couronne voisine (36, 38) d'un demi-pas de dents dans le sens circonférentiel.

0 205 896

Fig.3

Fig.4

Fig.5

Fig.6

Fig.7

Fig.8

2

Fig. 1

Fig. 2

0 205 896